# DEMANDE DE BREVET EUROPEEN

(11) **EP 3 489 051 A1**
(43) Date de publication de la demande: **29.05.2019**
(21) Numéro de dépôt: 18205333.0
(22) Date de dépôt: 09.11.2018
(51) Int. Cl.: B60G 21/073, B60G 21/10, B60G 17/005, B62K 5/10

(54) **DISPOSITIF DE SUSPENSION HYDROPNEUMATIQUE POUR UN VÉHICULE AUTOMOBILE INCLINABLE À BLOCAGE DU ROULIS À L'ARRÊT**

(30) Priorité: 24.11.2017 FR 1761158
(71) Demandeur: PSA Automobiles SA, 78300 Poissy (FR)
(72) Inventeur: GERARD, FABIEN, 91400 ORSAY (FR); TIXIER, JULIEN, 78460 CHEVREUSE (FR); GALIDIE, Stéphan, 93330 NEUILLY SUR MARNE (FR)

(57) **Abrégé**

Un dispositif de suspension hydropneumatique (DS) équipe un véhicule automobile inclinable (V) ayant un train (TR) comportant des roues droite (RD) et gauche (RG), et comprend :
- des amortisseurs droit (AMD) et gauche (AMG) couplés aux roues droite (RD) et gauche (RG) et couplés entre eux par un circuit hydraulique (CIH),
- des moyens de couplage (MCP) comportant des première à quatrième entrées/sorties couplées respectivement à une entrée/sortie droite du circuit hydraulique (CIH), une entrée/sortie de l'amortisseur droit (AMD), une entrée/sortie gauche du circuit hydraulique (CIH) et une entrée/sortie de l'amortisseur gauche (AMG), et prenant soit un état de couplage permettant une circulation de fluide entre les amortisseurs droit (AMD) et gauche (AMG) et le circuit hydraulique (CIH), soit un état de découplage interdisant la circulation de fluide entre les amortisseurs droit (AMD) et gauche (AMG) et le circuit hydraulique (CIH).

## Description

L'invention concerne les dispositifs de suspension hydropneumatique qui sont destinés à équiper des véhicules automobiles inclinables dans les virages.

On entend ici par « véhicule automobile inclinable » un véhicule terrestre disposant d'au moins une machine motrice lui permettant de se déplacer, pouvant s'incliner dans les virages et comprenant soit un train comportant une roue droite et une roue gauche, et un autre train comportant une unique roue, soit deux trains comportant chacun une roue droite et une roue gauche, Par conséquent, il pourra s'agir d'une voiture à trois ou quatre roues, ou d'une motocyclette à trois roues constituant un tricycle (comme par exemple un scooter à trois roues ou un « trike »), ou d'une motocyclette à quatre roues constituant un quadricycle, ou encore de tout autre véhicule à quatre roues et train arrière étroit doté d'une possibilité de forte inclinaison en courbe.

Dans certains de ces véhicules les roues droite et gauche d'au moins un train sont couplées à un dispositif de suspension hydropneumatique. Ce dernier peut comprendre des amortisseurs droit et gauche couplés respectivement aux roues droite et gauche et reliés entre eux par un circuit hydraulique qui est piloté par des moyens de contrôle.

Pour éviter que le véhicule tombe lorsqu'il est incliné et circule à faible vitesse ou est à l'arrêt, il a été proposé, notamment dans le document brevet FR3037279 A, un dispositif de suspension hydropneumatique comprenant des électrovannes permettant de freiner ou limiter la prise de roulis (ou inclinaison) du véhicule tout en autorisant, lorsqu'il penche sur l'un de ses côtés, un redressement par la dynamique du véhicule suite à l'action de son conducteur sur le guidon ou le volant. Lorsque le véhicule décélère et passe sous un seuil de vitesse prédéfini (par exemple d'environ 5 km/h), le placement des électrovannes dans leur état fermé (non passant) bloque (ou verrouille) le roulis et donc maintient le véhicule vertical. Cependant, lorsque le véhicule penche sur l'un de ses côtés et que sa vitesse est inférieure au seuil précité ou qu'il est à l'arrêt, son dispositif de suspension hydropneumatique ne permet pas de le redresser automatiquement. Cela résulte notamment du fait que les électrovannes du dispositif de suspension hydropneumatique sont conçues pour être normalement dans leur état ouvert (ou passant) en l'absence d'alimentation électrique (pour éviter un blocage (ou verrouillage) de roulis en cas de perte d'alimentation électrique pendant une phase de roulage), et donc en cas d'arrêt du véhicule et de coupure de son moteur les électrovannes reviennent automatiquement dans leur état ouvert qui empêche le blocage du roulis.

Cependant, pour une question de sécurité, les électrovannes précitées sont conçues pour être normalement dans leur état ouvert (ou passant) en l'absence d'alimentation électrique. Cela permet en effet d'éviter un blocage (ou verrouillage) de roulis en cas de perte d'alimentation électrique pendant une phase de roulage. Par conséquent, lorsque le véhicule s'arrête et que son moteur est coupé, les électrovannes reviennent automatiquement dans leur état ouvert, et donc le roulis n'est plus bloqué (ou verrouillé).

Il serait certes possible d'équiper le véhicule d'une béquille manuelle ou électrique. Mais dans la pratique cela s'avère impossible à réaliser lorsque le poids du véhicule est important, et lorsque le conducteur est assis à l'intérieur du véhicule et dans l'impossibilité de poser le pied à terre.

L'invention a donc notamment pour but d'améliorer la situation.

Elle propose notamment à cet effet un dispositif de suspension hydropneumatique, destiné à équiper un véhicule automobile inclinable ayant un train comportant des roues droite et gauche, et comprenant des amortisseurs droit et gauche couplés respectivement aux roues droite et gauche et reliés entre eux par un circuit hydraulique piloté par des moyens de contrôle.

Ce dispositif se caractérise par le fait qu'il comprend également des moyens de couplage comportant des première, deuxième, troisième et quatrième entrées/sorties de couplage couplées respectivement à une entrée/sortie droite du circuit hydraulique, une entrée/sortie de l'amortisseur droit, une entrée/sortie gauche du circuit hydraulique et une entrée/sortie de l'amortisseur gauche, et prenant soit un état de couplage dans lequel ils assurent un premier couplage entre les première et deuxième entrées/sorties de couplage et un second couplage entre les troisième et quatrième entrées/sorties de couplage afin de permettre une circulation de fluide entre les amortisseurs droit et gauche et le circuit hydraulique, soit un état de découplage dans lequel ils interdisent ces premier et second couplages afin d'interdire toute circulation de fluide entre chacun des amortisseurs droit et gauche et le circuit hydraulique.

On peut ainsi bloquer (ou verrouiller) le roulis, notamment à l'arrêt, y compris lorsque le moteur est coupé et donc que le circuit hydraulique n'est plus alimenté électriquement.

Le dispositif selon l'invention peut comporter d'autres caractéristiques qui peuvent être prises séparément ou en combinaison, et notamment :
- dans un premier mode de réalisation, ses moyens de couplage peuvent comprendre une vanne de type dit à quatre voies, chacune de ces voies comprenant l'une des première, deuxième, troisième et quatrième entrées/sorties de couplage ;
   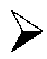 il peut comprendre un organe de contrôle à deux états, actionnable par une main d'un usager, et agissant sur la vanne pour la placer dans son état de couplage ou son état de découplage ;
   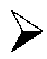 en variante, ses moyens de contrôle peuvent contrôler les état de couplage et état de découplage de la vanne via un mécanisme électrique agissant sur cette dernière, l'état de découplage étant imposé par les moyens de contrôle lorsque le véhicule est à l'arrêt ;
- dans un second mode de réalisation, ses moyens de couplage peuvent comprendre, d'une part, une vanne droite de type dit à deux voies, chacune de ces voies comprenant l'une des première et deuxième entrées/sorties de couplage, et, d'autre part, une vanne gauche de type dit à deux voies, chacune de ces voies comprenant l'une des troisième et quatrième entrées/sorties de couplage ;
   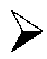 il peut comprendre un organe de contrôle à deux états, actionnable par une main d'un usager, et agissant sur les vannes droite et gauche pour les placer simultanément dans leur état de couplage ou leur état de découplage ;
   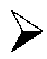 en variante, ses moyens de contrôle peuvent contrôler simultanément les état de couplage et état de découplage des vannes droite et gauche via un mécanisme électrique agissant simultanément sur ces dernières, les états de découplage étant imposés par les moyens de contrôle lorsque le véhicule est à l'arrêt ;
- son circuit hydraulique peut comprendre des accumulateurs droit et gauche et des première et deuxième électrovannes associées respectivement à des premier et second moyens anti-retour autorisant des circulations de fluide selon des sens opposés. Dans ce cas, ses moyens de contrôle placent soit les première et deuxième électrovannes dans un état ouvert lorsqu'une inclinaison du véhicule par rapport à une direction verticale est comprise entre zéro et une première valeur, soit la première, respectivement deuxième, électrovanne dans un état ouvert et la deuxième, respectivement première, électrovanne dans un état partiellement ouvert lorsque l'inclinaison est vers la droite, respectivement la gauche, et comprise entre la première valeur et une seconde valeur, soit encore la première, respectivement deuxième, électrovanne dans un état ouvert et la deuxième, respectivement première, électrovanne dans un état fermé lorsque l'inclinaison est vers la droite, respectivement la gauche, et supérieure à la seconde valeur ;
   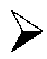 ses moyens de contrôle peuvent être agencés pour placer les première et deuxième électrovannes dans un état fermé lorsque la vitesse en cours du véhicule est inférieure à un seuil prédéfini alors qu'une machine motrice du véhicule est en fonctionnement.

L'invention propose également un véhicule automobile inclinable et comprenant au moins un train comportant des roues droite et gauche et un dispositif de suspension hydropneumatique du type de celui présenté ci-avant.

Un tel véhicule peut, par exemple, également comprendre un autre train comportant une unique roue, afin de constituer un tricycle (comme par exemple un scooter à trois roues ou un « trike »). Mais il pourrait également comprendre deux trains de roues droite et gauche, afin de constituer un quadricycle.

D'autres caractéristiques et avantages de l'invention apparaîtront à l'examen de la description détaillée ci-après, et des dessins annexés, sur lesquels :
- la figure 1 illustre schématiquement et fonctionnellement, dans une vue du dessus, un exemple de véhicule automobile à trois roues équipé d'un exemple de réalisation d'un dispositif de suspension selon l'invention,
- la figure 2 illustre schématiquement et fonctionnellement, dans une vue en coupe verticale et transversale, le véhicule de la figure 1 avec son dispositif de suspension placé dans un premier état général (adapté à des faibles inclinaisons), et
- la figure 3 illustre schématiquement et fonctionnellement, dans une vue en coupe verticale et transversale, le véhicule de la figure 1 avec son dispositif de suspension placé dans un état induisant un blocage de roulis.

L'invention a notamment pour but de proposer un dispositif de suspension hydropneumatique DS destiné à équiper un véhicule automobile inclinable V ayant au moins un train TR comportant une roue droite RD et une roue gauche RG, et permettant un blocage de roulis (ou d'inclinaison) à l'arrêt.

Dans ce qui suit, on considère, à titre d'exemple non limitatif, que le véhicule automobile inclinable V est un scooter à trois roues. Mais l'invention n'est pas limitée à ce type de véhicule automobile inclinable. Elle concerne en effet tout type de véhicule terrestre disposant d'au moins une machine motrice lui permettant de se déplacer, pouvant s'incliner dans les virages et comprenant soit un train comportant une roue droite et une roue gauche, et un autre train comportant une unique roue, soit deux trains comportant chacun une roue droite et une roue gauche. Par conséquent, il pourra s'agir d'une voiture à trois ou quatre roues, ou d'une motocyclette à trois roues constituant un tricycle (comme par exemple un scooter à trois roues ou un « trike »), ou d'une motocyclette à quatre roues constituant un quadricycle, ou encore de tout autre véhicule à quatre roues et train arrière étroit doté d'une possibilité de forte inclinaison en courbe.

Par ailleurs, on considère dans ce qui suit, à titre d'exemple non limitatif, que le véhicule automobile inclinable V ne comprend qu'une machine motrice lui permettant de se déplacer. Cette machine motrice est par exemple un moteur thermique. Mais un véhicule automobile inclinable V peut comprendre au moins un moteur thermique et/ou au moins une machine électrique.

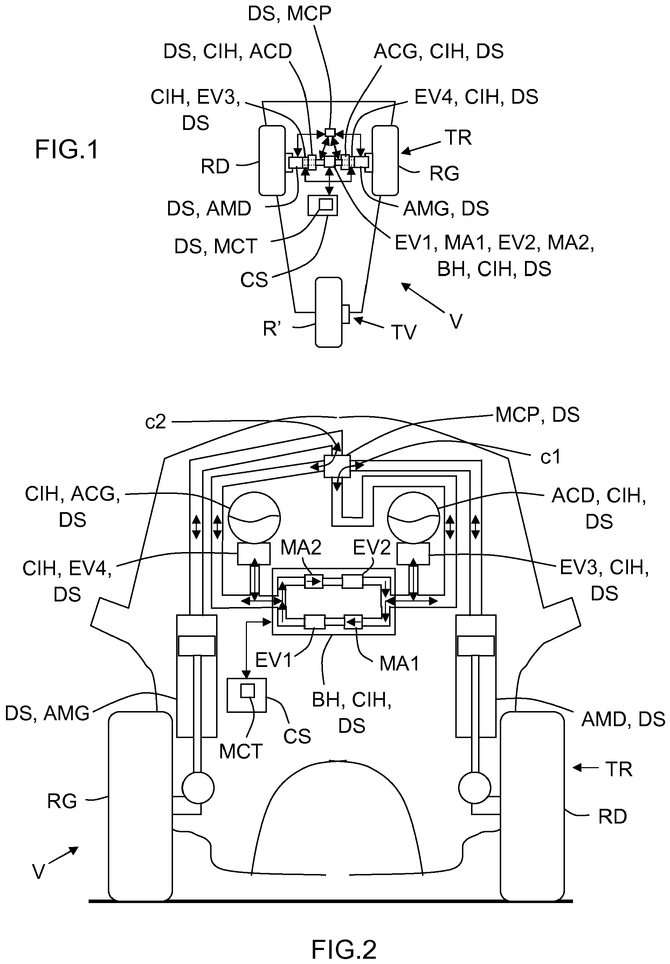

On a schématiquement représenté sur la figure 1 un exemple de véhicule automobile inclinable V équipé d'un dispositif de suspension hydropneumatique DS selon l'invention. Dans cet exemple non limitatif, le véhicule (automobile inclinable) V à trois roues RD, RG et R'. Il comprend plus précisément un train arrière TR comportant une roue droite RD et une roue gauche RG, et un train avant TV comportant une unique roue R'. Mais dans une variante de réalisation le véhicule V pourrait comprendre des trains avant et arrière comportant chacun une roue droite et une roue gauche. Dans une autre variante de réalisation le véhicule V pourrait comprendre un train avant comportant une roue droite et une roue gauche et un train arrière comportant une unique roue.

Le dispositif de suspension hydropneumatique DS est couplé aux roues droite RD et gauche RG, ici du train arrière TR.

Comme illustré au moins partiellement sur les figures 1 à 3, un dispositif de suspension hydropneumatique DS, selon l'invention, comprend au moins un amortisseur droit AMD, un amortisseur gauche AMG, un circuit hydraulique CIH piloté par des moyens de contrôle MCT, et des moyens de couplage MCP.

L'amortisseur droit AMD comprend une extrémité inférieure couplée à la roue droite RD. L'amortisseur gauche AMG comprend une extrémité inférieure couplée à la roue gauche RG. Chaque extrémité inférieure est par exemple la partie terminale de l'axe d'un piston, appelé tige de vérin. Ces amortisseurs droit AMD et gauche AMG sont par ailleurs reliés entre eux par les moyens de couplage MCP et le circuit hydraulique CIH. Ils sont par exemple agencés sous la forme de vérins comprenant chacun une chambre supérieure de volume variable communiquant avec les moyens de couplage MCP. On notera qu'en variante on pourrait avoir des vérins comprenant chacun une chambre inférieure de volume variable communiquant avec les moyens de couplage MCP.

Ces moyens de couplage MCP comprennent une première entrée/sortie de couplage couplée à une entrée/sortie droite du circuit hydraulique CIH, une deuxième entrée/sortie de couplage couplée à une entrée/sortie de l'amortisseur droit AMD, une troisième entrée/sortie de couplage couplée à une entrée/sortie gauche du circuit hydraulique CIH, et une quatrième entrée/sortie de couplage couplée à une entrée/sortie de l'amortisseur gauche AMG. Ces quatre couplages se font par le biais de conduits ou tuyaux adaptés à la circulation d'un fluide (comme par exemple de l'huile) du circuit hydraulique CIH.

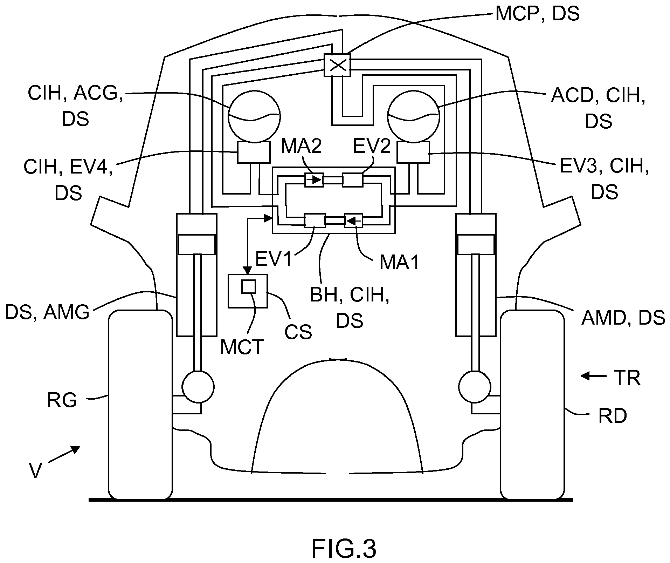

De plus, ces moyens de couplage MCP sont agencés de manière à prendre soit un état de couplage (illustré sur la figure 2), soit un état de découplage (illustré sur la figure 3).

Dans l'état de couplage (figure 2) les moyens de couplage MCP assurent un premier couplage c1 entre ses première et deuxième entrées/sorties de couplage (et donc entre le circuit hydraulique CIH et l'amortisseur droit AMD), et un second couplage c2 entre ses troisième et quatrième entrées/sorties de couplage (et donc entre le circuit hydraulique CIH et l'amortisseur gauche AMG), afin de permettre une circulation de fluide entre les amortisseurs droit AMD et gauche AMG et le circuit hydraulique CIH. En d'autres termes, les moyens de couplage MCP ne peuvent pas induire un blocage (ou verrouillage) de roulis, mais ce dernier pourrait être éventuellement imposé dans certaines situations par les moyens de contrôle MCT lorsque le circuit hydraulique CIH est alimenté électriquement, comme on le verra plus loin.

Dans l'état de découplage (figure 3) les moyens de couplage MCP interdisent les premier c1 et second c2 couplages, afin d'interdire toute circulation de fluide entre chacun des amortisseurs droit AMD et gauche AMG et le circuit hydraulique CIH. En d'autres termes, les moyens de couplage MCP induisent un blocage (ou verrouillage) de roulis, y compris lorsque le circuit hydraulique CIH n'est pas alimenté électriquement.

Au moins deux modes de réalisation des moyens de couplage MCP peuvent être envisagés.

Dans un premier mode de réalisation, illustré sur les figures 2 et 3, les moyens de couplage MCP comprennent une vanne de type dit à quatre voies. Dans ce cas, chacune des quatre voies comprend l'une des première, deuxième, troisième et quatrième entrées/sorties de couplage.

Cette vanne MCP est de type mécanique afin que son état ne dépende pas d'une alimentation électrique.

Par exemple, le dispositif de suspension hydropneumatique DS peut comprendre un organe de contrôle à deux états, actionnable par une main d'un usager, et agencé de manière à agir sur la vanne MCP pour la placer dans son état de couplage ou son état de découplage. Cet organe de contrôle peut, par exemple, comprendre une partie interne montée à rotation dans la vanne MCP et contrôlant simultanément les premier c1 et second c2 couplages, et une partie externe pouvant être entraînée manuellement en rotation. Cet exemple d'agencement impose que l'organe de commande soit facilement accessible par le conducteur.

En variante, les moyens de contrôle MCT peuvent être agencés de manière à contrôler les état de couplage et état de découplage de la vanne MCP via un mécanisme électrique qui est chargé d'agir sur cette dernière (MCP). Dans ce cas, l'état de découplage est imposé par les moyens de contrôle MCT lorsque le véhicule V est à l'arrêt.

Le mécanisme électrique peut, par exemple, comprendre au moins une biellette couplée à une vis sans fin entraînée en rotation par un moteur électrique dont l'alimentation électrique n'est coupée qu'une fois la vanne MCP placée dans son état de découplage (figure 3).

Dans un second mode de réalisation, non illustré, les moyens de couplage MCP comprennent une vanne droite de type dit à deux voies et une vanne gauche de type dit à deux voies. Dans ce cas, chacune des deux voies de la vanne droite comprend l'une des première et deuxième entrées/sorties de couplage, et chacune des deux voies de la vanne gauche comprend l'une des troisième et quatrième entrées/sorties de couplage.

Ces vannes droite et gauche MCP sont de type mécanique afin que leurs états ne dépendent pas d'une alimentation électrique.

Par exemple, le dispositif (de suspension hydropneumatique) DS peut comprendre un organe de contrôle à deux états, actionnable par une main d'un usager, et agencé de manière à agir sur les vannes droite et gauche MCP pour les placer simultanément dans leur état de couplage ou leur état de découplage.

Cet organe de contrôle peut, par exemple, comprendre une partie actionnable manuellement et couplée par des biellettes à deux parties internes montées à rotation dans les vannes droite et gauche MCP et contrôlant respectivement et simultanément les premier c1 et second c2 couplages. Cet exemple d'agencement impose que la partie actionnable manuellement de l'organe de commande soit facilement accessible par le conducteur.

En variante, les moyens de contrôle MCT peuvent être agencés de manière à contrôler simultanément les état de couplage et état de découplage des vannes droite et gauche MCP via un mécanisme électrique qui est chargé d'agir simultanément sur ces dernières (MCP). Dans ce cas, les états de découplage sont imposés simultanément par les moyens de contrôle MCT lorsque le véhicule V est à l'arrêt.

Le mécanisme électrique peut, par exemple, comprendre des biellettes couplées à une vis sans fin entraînée en rotation par un moteur électrique dont l'alimentation électrique n'est coupée qu'une fois les vannes droite et gauche MCP placées dans leur état de découplage.

On notera que le circuit hydraulique CIH peut se présenter de différentes manières. L'une d'entre elles est décrite ci-après, à titre d'exemple non limitatif, en référence aux figures 2 et 3.

Dans cet exemple, le circuit hydraulique CIH comprend notamment une première électrovanne EV1 associée à un premier moyen anti-retour MA1 autorisant la circulation du fluide selon un premier sens, une deuxième électrovanne EV2 associée à un second moyen anti-retour MA2 autorisant la circulation de ce même fluide selon un second sens opposé au premier sens, et des accumulateurs droit ACD et gauche ACG.

Ici, le premier sens va de l'amortisseur droit AMD vers l'amortisseur gauche AMG, et donc le second sens va de l'amortisseur gauche AMG vers l'amortisseur droit AMD.

La première électrovanne EV1 est couplée au premier moyen anti-retour MA1 via un sous-conduit et communique via un autre sous-conduit avec une partie droite d'un conduit principal qui communique également avec la première entrée/sortie des moyens de couplage MCP. Le premier moyen anti-retour MA1 communique via un autre sous-conduit avec une partie gauche du conduit principal qui communique également avec la troisième entrée/sortie des moyens de couplage MCP.

La deuxième électrovanne EV2 est couplée au second moyen anti-retour MA2 via un sous-conduit et communique via un autre sous-conduit avec la partie gauche du conduit principal. Le second moyen anti-retour MA2 communique via un autre sous-conduit avec la partie droite du conduit principal.

On notera que les première EV1 et deuxième EV2 électrovannes peuvent être placées dans au moins trois états : un état (totalement) ouvert dans lequel elles laissent passer l'intégralité du fluide parvenant sur leur entrée sans perte de débit, un état (totalement) fermé dans lequel elles interdisent tout passage du fluide parvenant sur leur entrée, et un état partiellement ouvert dans lequel elles laissent passer une partie du fluide parvenant sur leur entrée avec une restriction de débit et une perte de charge. De préférence, elles sont de type dit « proportionnel », et donc peuvent prendre une pluralité d'états partiellement ouverts différents, compris entre l'état fermé et l'état ouvert, en fonction d'une tension de commande définie par les moyens de contrôle MCT.

De préférence, l'état par défaut des première EV1 et deuxième EV2 électrovannes est l'état (totalement) ouvert.

Comme illustré non limitativement sur les figures 2 et 3, les première EV1 et deuxième EV2 électrovannes, les premier MA1 et second MA2 moyens anti-retour, et les différents sous-conduits peuvent être logés dans un boîtier hydraulique BH qui est couplé aux moyens de contrôle MCT.

Par exemple, les premier MA1 et second MA2 moyens anti-retour peuvent être des clapets anti-retour.

Dans l'exemple de réalisation illustré non limitativement sur la figure 1, les moyens de contrôle MCT sont installés dans un calculateur CS du véhicule V, par exemple chargé de la supervision de plusieurs organes. Mais cela n'est pas obligatoire. En effet, ils pourraient faire partie d'un calculateur appartenant au dispositif DS. Par ailleurs, ces moyens de contrôle MCT peuvent être réalisés sous la forme de modules logiciels (ou informatiques (ou encore « software »)), ou bien d'une combinaison de circuits électroniques (ou « hardware ») et de modules logiciels.

Les moyens de contrôle MCT sont agencés pour déterminer les états dans lesquels doivent être placées les électrovannes (notamment EV1 et EV2) en fonction, au moins, de l'inclinaison du véhicule V par rapport à la direction verticale. Plus précisément, ils sont agencés pour définir au moins trois états généraux du dispositif DS.

Un premier état général est illustré sur la figure 2. Il correspond à un placement des première EV1 et deuxième EV2 électrovannes dans leur état ouvert lorsque les moyens de couplage MCP sont dans leur état de couplage et lorsque l'inclinaison du véhicule V (par rapport à la direction verticale) est comprise entre zéro (0) et une première valeur v1. On comprendra que ce premier état général est adapté à des faibles inclinaisons qui sont choisies librement par le conducteur sans contrôle de l'inclinaison (ou roulis) par les moyens de contrôle MCT.

En cas de passage d'un obstacle sur l'une des deux roues du train avant TV, par exemple la roue droite RD, sans inclinaison du véhicule V, l'huile de l'amortisseur droit AMD est refoulée, via le premier couplage c1 des moyens de couplage MCP, dans les accumulateurs droit ACD et gauche ACG en comprimant le gaz sous haute pression qu'ils comprennent chacun.

En cas de passage d'un même obstacle sur les deux roues RD et RG du train avant TV, sans inclinaison du véhicule V, l'huile de l'amortisseur droit AMD est sensiblement refoulée, via le premier couplage c1 des moyens de couplage MCP, dans l'accumulateur droit ACD en comprimant le gaz sous haute pression qu'il comprend, et l'huile de l'amortisseur gauche AMG est sensiblement refoulée, via le second couplage c2 des moyens de couplage MCP, dans l'accumulateur gauche ACG en comprimant le gaz sous haute pression qu'il comprend.

En cas de faible inclinaison (ou prise de roulis) vers la gauche, l'huile de l'amortisseur gauche AMG est sensiblement refoulée, via le second couplage c2 des moyens de couplage MCP, dans le boîtier hydraulique BH, puis passe librement au travers du boîtier hydraulique BH du côté gauche vers le côté droit, puis rejoint, via le premier couplage c1 des moyens de couplage MCP, la chambre supérieure de l'amortisseur droit AMD. En cas de faible inclinaison (ou prise de roulis) vers la droite, l'huile de l'amortisseur droit AMD est sensiblement refoulée, via le premier couplage c1 des moyens de couplage MCP, dans le boîtier hydraulique BH, puis passe librement au travers du boîtier hydraulique BH du côté droit vers le côté gauche, puis rejoint, via le second couplage c2 des moyens de couplage MCP, la chambre supérieure de l'amortisseur gauche AMG.

Un deuxième état général, non illustré, correspond soit à un placement de la deuxième électrovanne EV2 dans son état ouvert et de la première électrovanne EV1 dans un état partiellement ouvert lorsque les moyens de couplage MCP sont dans leur état de couplage et lorsque l'inclinaison du véhicule V est vers la gauche et comprise entre la première valeur v1 et une seconde valeur v2, soit à un placement de la première électrovanne EV1 dans son état ouvert et de la deuxième électrovanne EV2 dans un état partiellement ouvert lorsque les moyens de couplage MCP sont dans leur état de couplage et lorsque l'inclinaison du véhicule V est vers la droite et comprise entre les première v1 et seconde v2 valeurs. On comprendra que ce deuxième état général est adapté à des inclinaisons intermédiaires qui ne font pas, a priori, courir de risque de chute par basculement au conducteur et donc qui sont choisies par ce conducteur sous le contrôle des moyens de contrôle MCT. La seconde valeur v2 est une inclinaison qui est inférieure à l'inclinaison induisant un basculement naturel du véhicule V.

En cas d'inclinaison (ou prise de roulis) intermédiaire vers la gauche, l'huile de l'amortisseur gauche AMG n'est que partiellement refoulée dans l'amortisseur droit AMD, via le second couplage c2, le boîtier hydraulique BH et le premier couplage c1, et l'huile de l'amortisseur droit AMD est sensiblement refoulée dans l'amortisseur gauche AMG, via le premier couplage c1, le boîtier hydraulique BH et le second couplage c2, afin de rendre l'augmentation d'inclinaison de plus en plus difficile et ainsi faire sentir au conducteur que plus il incline son véhicule V plus la force à exercer devient grande. L'huile passe donc librement au travers du boîtier hydraulique BH du côté droit vers le côté gauche, mais passe de façon contrôlée au travers du boîtier hydraulique BH du côté gauche vers le côté droit.

En cas d'inclinaison (ou prise de roulis) intermédiaire vers la droite, l'huile de l'amortisseur droit AMD n'est que partiellement refoulée dans l'amortisseur gauche AMG, via le premier couplage c1, le boîtier hydraulique BH et le second couplage c2, et l'huile de l'amortisseur gauche AMG est sensiblement refoulée dans l'amortisseur droit AMD, via le second couplage c2, le boîtier hydraulique BH et le premier couplage c1, afin de rendre l'augmentation d'inclinaison de plus en plus difficile et ainsi faire sentir au conducteur que plus il incline son véhicule V plus la force à exercer devient grande. L'huile passe donc librement au travers du boîtier hydraulique BH du côté gauche vers le côté droit, mais passe de façon contrôlée au travers du boîtier hydraulique BH du côté droit vers le côté gauche.

La suspension indépendante des deux roues RD et RG est donc toujours assurée dans le deuxième état général.

Un troisième état général, non illustré, correspond soit à un placement de la deuxième électrovanne EV2 dans son état ouvert et de la première électrovanne EV1 dans son état fermé lorsque les moyens de couplage MCP sont dans leur état de couplage et lorsque l'inclinaison du véhicule V est vers la gauche et supérieure à la seconde valeur v2, soit à un placement de la première électrovanne EV1 dans son état ouvert et de la deuxième électrovanne EV2 dans son état fermé lorsque les moyens de couplage MCP sont dans leur état de couplage et lorsque l'inclinaison du véhicule V est vers la droite et supérieure à la seconde valeur v2. On comprendra que ce troisième état général est adapté à des fortes inclinaisons qui font courir un important risque de chute par basculement au conducteur et donc qui sont empêchées par les moyens de contrôle MCT. En fait, la fermeture totale de l'électrovanne EV1 ou EV2 (associée au côté où le véhicule V penche) permet de bloquer l'amortisseur situé du côté où le véhicule V penche, et donc de le transformer en une espèce de butée mécanique.

En cas de forte inclinaison (ou prise de roulis) vers la gauche, l'huile de l'amortisseur gauche AMG est interdite de refoulement vers l'amortisseur droit AMD, afin d'empêcher toute augmentation d'inclinaison, et dans le même temps l'huile de l'amortisseur droit AMD a la possibilité d'être refoulée vers l'amortisseur gauche AMG, via le premier couplage c1, le boîtier hydraulique BH et le second couplage c2, sous l'action du conducteur qui de par sa volonté a la possibilité de redresser le véhicule lui-même. L'huile ne passe donc librement au travers du boîtier hydraulique BH que du côté droit vers le côté gauche. Ces deux fonctions de blocage du roulis dans un sens et de redressement possible par le conducteur dans l'autre sens sont rendues possibles grâce aux deux clapets anti-retour MA1 et MA2 du circuit hydraulique.

En cas de forte inclinaison (ou prise de roulis) vers la droite, l'huile de l'amortisseur droit AMD est interdite de refoulement vers l'amortisseur gauche AMG, afin d'empêcher toute augmentation d'inclinaison, et dans le même temps l'huile de l'amortisseur gauche AMG a la possibilité d'être refoulée vers l'amortisseur droit AMD, via le second couplage c2, le boîtier hydraulique BH et le premier couplage c1, sous l'action du conducteur qui de par sa volonté a la possibilité de redresser le véhicule lui-même. L'huile ne passe donc librement au travers du boîtier hydraulique BH que du côté gauche vers le côté droit. Ces deux fonctions de blocage du roulis dans un sens et de redressement possible par le conducteur dans l'autre sens sont rendues possibles grâce aux deux clapets anti-retour MA1 et MA2 du circuit hydraulique.

On notera que la présence des premier MA1 et second MA2 moyens anti-retour permet non seulement d'éviter le basculement du véhicule V lorsque l'inclinaison devient supérieure à la seconde valeur v2 et donc que la première EV1 ou seconde EV2 électrovanne associée au côté incliné est dans son état fermé, mais également de faciliter le redressement du véhicule V par le conducteur.

On notera également que le dispositif DS peut être également et éventuellement placé par les moyens de contrôle MCT dans un quatrième état général adapté au cas où le véhicule V est à l'arrêt avec son moteur tournant, ou circule à faible vitesse. Pour ce faire, les moyens de contrôle MCT sont agencés pour placer les première EV1 et deuxième EV2 électrovannes dans leur état fermé lorsque la vitesse en cours du véhicule V est inférieure à un seuil prédéfini alors que chaque machine motrice (ici le moteur thermique) du véhicule V est en fonctionnement. Ce seuil peut, par exemple, être égal à 5 km/h.

Ainsi, lorsque le dispositif DS est placé dans son quatrième état général, et donc que le véhicule V est à l'arrêt ou circule à très faible vitesse (éventuellement en marche arrière), le roulis (ou inclinaison) est interdit du fait que les première EV1 et deuxième EV2 électrovannes sont dans leur état fermé, mais la suspension reste opérationnelle du fait que l'huile peut circuler de l'amortisseur droit AMD vers l'accumulateur droit ACD et/ou de l'amortisseur gauche AMG vers l'accumulateur gauche ACG. Cela permet d'éviter au conducteur de sortir un pied pour éviter un basculement, (ce qui peut être inconfortable et/ou potentiellement dangereux).

Afin de permettre le placement du dispositif DS dans encore au moins un cinquième état général (non illustré), adapté au cas où le véhicule V est en stationnement (fonction parking), ce dispositif DS peut également comprendre des troisième EV3 et quatrième EV4 électrovannes, comme illustré non limitativement sur les figures 2 et 3.

La troisième électrovanne EV3 est intercalée entre la partie droite du conduit principal et l'accumulateur droit ACD afin de contrôler l'accès à ce dernier (ACD) en fonction d'instructions définies par les moyens de contrôle MCT. La quatrième électrovanne EV4 est intercalée entre la partie gauche du conduit principal et l'accumulateur gauche ACG afin de contrôler l'accès à ce dernier (ACG) en fonction d'instructions définies par les moyens de contrôle MCT.

On notera que ces troisième EV3 et quatrième EV4 électrovannes peuvent être placées dans au moins deux états : un état (totalement) ouvert dans lequel elles laissent passer l'intégralité du fluide parvenant sur leur entrée sans perte de débit, et un état (totalement) fermé dans lequel elles interdisent tout passage du fluide parvenant sur leur entrée.

Dans ce cas, les moyens de contrôle MCT sont agencés :
- soit pour placer toutes les électrovannes EV1 à EV4 dans leur état ouvert lorsque l'inclinaison est comprise entre zéro (0) et la première valeur v1 (premier état général),
- soit pour placer la première EV1, respectivement deuxième EV2, électrovanne et les troisième EV3 et quatrième EV4 électrovannes dans leur état ouvert et ladite deuxième (EV2), respectivement première (EV1), électrovanne dans un état partiellement ouvert lorsque l'inclinaison est vers la droite, respectivement la gauche, et comprise entre les première v1 et seconde v2 valeurs (deuxième état général),
- soit pour placer la première EV1, respectivement deuxième EV2, électrovanne et les troisième EV3 et quatrième EV4 électrovannes dans leur état ouvert et la deuxième EV2, respectivement première EV1, électrovanne dans son état fermé lorsque l'inclinaison est vers la droite, respectivement la gauche, et supérieure à la seconde valeur v2 (troisième état général),
- soit éventuellement pour placer les première EV1 et deuxième EV2 électrovannes dans leur état fermé et les troisième EV3 et quatrième EV4 électrovannes dans leur état ouvert lorsque la vitesse en cours du véhicule V est inférieure à un seuil prédéfini alors que chaque machine motrice (ici le moteur thermique) du véhicule V est en fonctionnement (quatrième état général optionnel),
- soit encore pour placer toutes les électrovannes EV1 à EV4 dans leur état fermé lorsque la vitesse en cours du véhicule V est nulle et qu'aucune machine motrice (ici le moteur thermique) du véhicule V ne fonctionne (cinquième état général).

On comprendra que lorsque le dispositif DS est dans son cinquième état général non seulement le roulis (ou inclinaison) est interdit du fait que les première EV1 et deuxième EV2 électrovannes sont dans leur état fermé et alors même que les moyens de couplage MCP sont dans leur état de couplage, mais également la suspension est bloquée du fait que les troisième EV3 et quatrième EV4 électrovannes sont également dans leur état fermé.

L'invention présente plusieurs avantages, parmi lesquels :
- elle permet de stationner le véhicule sans effort et sans risque de chute (car on n'a pas à le manipuler),
- elle n'induit qu'un très léger surcoût du fait de l'adjonction d'une ou deux vannes mécaniques et de conduits associés au circuit hydraulique,
- elle n'induit pas une augmentation significative de l'encombrement,
- la (les) vanne(s) mécanique(s) peu(ven)t être installée(s) en de nombreux endroits du véhicule.

## Revendications

1. Dispositif de suspension hydropneumatique (DS) pour un véhicule automobile inclinable (V) ayant un train (TR) comportant des roues droite (RD) et gauche (RG), ledit dispositif (DS) comprenant des amortisseurs droit (AMD) et gauche (AMG) couplés respectivement auxdites roues droite (RD) et gauche (RG) et couplés entre eux par un circuit hydraulique (CIH) piloté par des moyens de contrôle (MCT), **caractérisé en ce qu'**il comprend en outre des moyens de couplage (MCP) comportant des première, deuxième, troisième et quatrième entrées/sorties de couplage couplées respectivement à une entrée/sortie droite dudit circuit hydraulique (CIH), une entrée/sortie dudit amortisseur droit (AMD), une entrée/sortie gauche dudit circuit hydraulique (CIH) et une entrée/sortie dudit amortisseur gauche (AMG), et prenant soit un état de couplage dans lequel ils assurent un premier couplage entre lesdites première et deuxième entrées/sorties de couplage et un second couplage entre lesdites troisième et quatrième entrées/sorties de couplage afin de permettre une circulation de fluide entre lesdits amortisseurs droit (AMD) et gauche (AMG) et ledit circuit hydraulique (CIH), soit un état de découplage dans lequel ils interdisent lesdits premier et second couplages afin d'interdire toute circulation de fluide entre chacun desdits amortisseurs droit (AMD) et gauche (AMG) et ledit circuit hydraulique (CIH).

2. Dispositif selon la revendication 1, **caractérisé en ce que** lesdits moyens de couplage (MCP) comprennent une vanne de type dit à quatre voies, chacune desdites voies comprenant l'une desdites première, deuxième, troisième et quatrième entrées/sorties de couplage.

3. Dispositif selon la revendication 2, **caractérisé en ce qu'**il comprend un organe de contrôle à deux états, actionnable par une main d'un usager, et agissant sur ladite vanne (MCP) pour la placer dans son état de couplage ou son état de découplage.

4. Dispositif selon la revendication 2, **caractérisé en ce que** lesdits moyens de contrôle (MCT) contrôlent lesdits état de couplage et état de découplage de ladite vanne (MCP) via un mécanisme électrique agissant sur cette dernière (MCP), ledit état de découplage étant imposé par lesdits moyens de contrôle (MCT) lorsque ledit véhicule (V) est à l'arrêt.

5. Dispositif selon la revendication 1, **caractérisé en ce que** lesdits moyens de couplage (MCP) comprennent i) une vanne droite de type dit à deux voies, chacune desdites voies comprenant l'une desdites première et deuxième entrées/sorties de couplage, et ii) une vanne gauche de type dit à deux voies, chacune desdites voies comprenant l'une desdites troisième et quatrième entrées/sorties de couplage.

6. Dispositif selon la revendication 5, **caractérisé en ce qu'**il comprend un organe de contrôle à deux états, actionnable par une main d'un usager, et agissant sur lesdites vannes droite et gauche (MCP) pour les placer simultanément dans leur état de couplage ou leur état de découplage.

7. Dispositif selon la revendication 5, **caractérisé en ce que** lesdits moyens de contrôle (MCT) contrôlent simultanément lesdits état de couplage et état de découplage desdites vannes droite et gauche (MCP) via un mécanisme électrique agissant simultanément sur ces dernières (MCP), lesdits états de découplage étant imposés par lesdits moyens de contrôle (MCT) lorsque ledit véhicule (V) est à l'arrêt.

8. Dispositif selon l'une des revendications 1 à 7, **caractérisé en ce que** ledit circuit hydraulique (CIH) comprend des accumulateurs droit (ACD) et gauche (ACG) et des première (EV1) et deuxième (EV2) électrovannes associées respectivement à des premier (MA1) et second (MA2) moyens anti-retour autorisant des circulations de fluide selon des sens opposés, et **en ce que** lesdits moyens de contrôle (MCT) placent soit lesdites première (EV1) et deuxième (EV2) électrovannes dans un état ouvert lorsqu'une inclinaison dudit véhicule (V) par rapport à une direction verticale est comprise entre zéro et une première valeur, soit ladite première (EV1), respectivement deuxième (EV2), électrovanne dans un état ouvert et ladite deuxième (EV2), respectivement première (EV1), électrovanne dans un état partiellement ouvert lorsque ladite inclinaison est vers la droite, respectivement la gauche, et comprise entre ladite première valeur et une seconde valeur, soit encore ladite première (EV1), respectivement deuxième (EV2), électrovanne dans un état ouvert et ladite deuxième (EV2), respectivement première (EV1), électrovanne dans un état fermé lorsque ladite inclinaison est vers la droite, respectivement la gauche, et supérieure à ladite seconde valeur.

9. Véhicule automobile inclinable (V) ayant au moins un train (TR) comportant des roues droite (RD) et gauche (RG), **caractérisé en ce qu'**il comprend en outre un dispositif de suspension hydropneumatique (DS) selon l'une des revendications précédentes.

10. Véhicule selon la revendication 9, **caractérisé en ce qu'**il comprend un autre train (TV) comportant une unique roue (R').
